# EUROPÄISCHE PATENTANMELDUNG

(11) **EP 4 516 611 A1**
(43) Veröffentlichungstag der Anmeldung: **05.03.2025**
(21) Anmeldenummer: 24194413.1
(22) Anmeldetag: 13.08.2024
(51) Int. Cl.: B60W 40/101, B60C 23/04, G01B 21/26, G01M 17/013

(54) **SCHRÄGLAUFERKENNUNG FÜR EINEN REIFEN EINES FORTBEWEGUNGSMITTELS**

(30) Priorität: 25.08.2023 DE 102023208153
(71) Anmelder: Continental Reifen Deutschland GmbH, 30175 Hannover (DE)
(72) Erfinder: Dr. Sahlmüller, Baldo, 30175 Hannover (DE); Zhou, Jingyi, 30175 Hannover (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Erkennen eines Schräglaufes eines Reifens eines Fortbewegungsmittels. Die Erfindung betrifft zudem ein Fortbewegungsmittel, in dem ein erfindungsgemäßes Verfahren oder eine erfindungsgemäße Vorrichtung eingesetzt wird. In einem ersten Schritt wird während eines Betriebs des Fortbewegungsmittels eine laterale Beschleunigung mittels eines im Reifen angeordneten Sensors erfasst (S1). Ein Verhalten eines Signals des Sensors wird über einen Zeitraum ausgewertet (S2). Wenn sich das Verhalten des Signals des Sensors über den Zeitraum ändert, wird das Vorliegen eines Schräglaufes des Reifens festgestellt (S3).

## Beschreibung

Die vorliegende Erfindung betrifft ein Verfahren, ein Computerprogramm mit Instruktionen und eine Vorrichtung zum Erkennen eines Schräglaufes eines Reifens eines Fortbewegungsmittels. Die Erfindung betrifft zudem ein Fortbewegungsmittel, in dem ein erfindungsgemäßes Verfahren oder eine erfindungsgemäße Vorrichtung eingesetzt wird.

Ein Schräglauf von Reifen, z.B. ein Sturzfehler oder ein Spurfehler, wirkt sich negativ auf den Reifenverschleiß und die Fahreigenschaften von Fortbewegungsmitteln aus. Eine Erkennung eines Schräglaufes ist dem Laien allerdings in der Regel nicht möglich. Daher besteht ein Bedürfnis nach einer sensorbasierten Erkennung eines Reifenschräglaufes.

In diesem Zusammenhang beschreibt EP 1 612 067 B1 ein System zur Analyse eines Fahrzeugzustandes. Ein Fahrzeug, das mit einem optimalen Aufhängungs- /Fahrwerkszustand versehen ist, wird für eine bestimmte Zeitspanne unter einer vorbestimmten Bedingung gefahren. Dabei werden die Ausgaben von Kraftsensoren im Fahrwerk erfasst und als Referenzwert in einem ersten Speicherbereich gespeichert. Zudem werden Änderungen der Ausgaben der Kraftsensoren aufgrund der Nutzung des Fahrzeuge in einem zweiten Speicherbereich gespeichert. Eine Analysevorrichtung ist in der Lage, den Zustand des Fahrzeugs auf der Grundlage der in den beiden Speicherbereichen gespeicherten Informationen zu analysieren. Wenn zum Beispiel der Spurwinkel, der Sturzwinkel, der Innendruck des Reifens oder ähnliches im Fahrzeug geändert wird, werden die Krafteinleitungen von den Rädern auf die Fahrzeugkarosserie geändert, wodurch eine Änderung des Zustands des Fahrzeugs erfasst werden kann.

Zur Überwachung der Zustände von Reifen eines Fortbewegungsmittels, insbesondere zur Überwachung des Reifendrucks, werden Reifensensoren verwendet. Diese können beispielsweise im Inneren eines Reifens angeordnet sein. Derartige Reifensensoren sind ausgestaltet, positionsgebunden einen Reifendruck zu erfassen, zu verarbeiten und an ein elektronisches Steuergerät (engl. Electronic Control Unit; ECU) eines Überwachungssystems zu übertragen. Das Steuergerät nimmt die gesendeten Daten über ein Empfangsmodul des Überwachungssystems entgegen und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für einen solchen Reifensensor ist in DE 102 43 441 A1 beschrieben. Aktuelle Reifensensoren können oftmals auch die Reifentemperatur und Beschleunigungen messen.

Vor diesem Hintergrund beschreibt US 9,466,157 B2 ein Verfahren zur bordseitigen Bestimmung der Fahrzeugradausrichtung. In einem ersten Schritt werden mittels eines Beschleunigungsmessers, der am Fahrzeugrad angebracht ist, die Querbeschleunigung gemessen und ein Querbeschleunigungssignal ausgegeben. Aus einem ersten Abschnitt des Querbeschleunigungssignals, der während einer Längsbeschleunigung a0 des Fahrzeugs gemessen wird, wird ein erster Querbeschleunigungswert bestimmt. Aus einem zweiten Abschnitt des Querbeschleunigungssignals, der gemessen wird, während sich das Fahrzeugs mit konstanter Geschwindigkeit bewegt, wird ein zweiter Querbeschleunigungswert bestimmt. Aus der Längsbeschleunigung a0 und den beiden Querbeschleunigungswerten wird ein Spurwinkel des Fahrzeugs bestimmt.

Es ist eine Aufgabe der vorliegenden Erfindung, eine verbesserte Lösung für die Schräglauferkennung für einen Reifen eines Fortbewegungsmittels bereitzustellen.

Diese Aufgabe wird durch ein Verfahren mit den Merkmalen des Anspruchs 1, durch ein Computerprogramm mit Instruktionen gemäß Anspruch 8, durch eine Vorrichtung mit den Merkmalen des Anspruchs 9 und durch ein Fortbewegungsmittel gemäß Anspruch 10 gelöst. Bevorzugte Ausgestaltungen der Erfindung sind Gegenstand der abhängigen Ansprüche.

Gemäß einem ersten Aspekt der Erfindung umfasst ein Verfahren zum Erkennen eines Schräglaufes eines Reifens eines Fortbewegungsmittels die Schritte:
- Erfassen einer lateralen Beschleunigung mittels eines im Reifen angeordneten Sensors während eines Betriebs des Fortbewegungsmittels;
- Auswerten eines Verhaltens eines Signals des Sensors über einen Zeitraum; und
- Feststellen, dass ein Schräglauf des Reifens vorliegt, wenn sich das Verhalten des Signals des Sensors über den Zeitraum ändert.

Gemäß einem weiteren Aspekt der Erfindung umfasst ein Computerprogramm Instruktionen, die bei Ausführung durch einen Computer den Computer zur Ausführung der folgenden Schritte zum Erkennen eines Schräglaufes eines Reifens eines Fortbewegungsmittels veranlassen:
- Erfassen einer lateralen Beschleunigung mittels eines im Reifen angeordneten Sensors während eines Betriebs des Fortbewegungsmittels;
- Auswerten eines Verhaltens eines Signals des Sensors über einen Zeitraum; und
- Feststellen, dass ein Schräglauf des Reifens vorliegt, wenn sich das Verhalten des Signals des Sensors über den Zeitraum ändert.

Der Begriff Computer ist dabei breit zu verstehen. Insbesondere umfasst er auch Steuergeräte, eingebettete Systeme und andere prozessorbasierte Datenverarbeitungsvorrichtungen. Zudem werden die einzelnen Schritte nicht notwendigerweise unmittelbar vom Computer ausgeführt. Es ist ebenso möglich, dass der Computer zur Durchführung einzelner Schritte externe Komponenten ansteuert bzw. auf diese zurückgreift.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Erkennen eines Schräglaufes eines Reifens eines Fortbewegungsmittels auf:
- eine Erfassungseinheit zum Erfassen einer lateralen Beschleunigung mittels eines im Reifen angeordneten Sensors während eines Betriebs des Fortbewegungsmittels; und
- eine Auswerteeinheit zum Auswerten eines Verhaltens eines Signals des Sensors über einen Zeitraum und zum Feststellen, dass ein Schräglauf des Reifens vorliegt, wenn sich das Verhalten des Signals des Sensors über den Zeitraum ändert.

Bei der erfindungsgemäßen Lösung wird im Reifen ein Reifensensor eingebaut, z.B. in der Mitte des Innerliners, der mindestens die Beschleunigung in lateraler Richtung messen kann. Der Reifensensor misst nun dynamisch die Lateralbeschleunigung, bevorzugt mit hoher zeitlicher Auflösung, beispielsweise mit 3000 Hz. Durch eine fortlaufende Überwachung der Signale des Reifensensors wird nun festgestellt, ob sich das Verhalten der Signale mit der Zeit ändert. Eine fortlaufende Überwachung wird beispielsweise dadurch gewährleistet, dass der Reifensensor in regelmäßigen zeitlichen Abständen eine zeitlich hoch aufgelöste Messung über einen Zeitraum von vorzugsweise mindestens 2,5 Radumdrehungen durchführt. Die regelmäßigen zeitlichen Abstände betragen hier bevorzugt zeitliche Abstände zwischen 2 Minuten und 12 Stunden. Die Änderung des Signalverhaltens mit der Zeit ist ein Hinweis darauf, dass ein Schräglauf des Reifens vorliegt. Vorzugsweise werden der Reifensensor oder die Auswerteeinheit zunächst mit den zu Anfang aufgenommenen Daten kalibriert, bei denen der Reifen idealerweise keinen unerwünschten Schräglauf aufweist. Die Auswertung der Signale kann vollständig im Reifensensor erfolgen. Alternativ kann die Auswertung auch teilweise oder vollständig außerhalb des Reifensensors erfolgen.

Gemäß einem Aspekt der Erfindung umfasst das Auswerten des Verhaltens des Signals des Sensors:
- Durchführen einer Frequenzanalyse des Signals; und
- Erkennen einer Änderung eines Signalanteils in einem vorgegebenen Frequenzbereich über den Zeitraum.

Beim Auswerten des Verhaltens des Signals des Sensors kann insbesondere das Frequenzbild des Signals betrachtet werden, beispielsweise über eine schnelle Fourier-Transformation (engl.: Fast Fourier Transformation; FFT). Vorzugsweise werden dabei der Signalanteil in einem bestimmten Bereich, beispielsweise zwischen 200 Hz und 600 Hz, und dessen zeitliche Änderung betrachtet. Dies reduziert den für die Auswertung erforderlichen Rechenaufwand.

Gemäß einem Aspekt der Erfindung wird ein möglicher Spurfehler des Reifens festgestellt, wenn eine Änderung des Signalanteils in dem vorgegebenen Frequenzbereich über den Zeitraum erkannt wird. Sollte sich das Frequenzbild ändern, deutet dies auf eine fehlerhafte Einstellung der Spur des Reifens hin. Es kann dann eine Warnung ausgegeben werden, dass der Reifen einen möglichen Spurfehler hat.

Gemäß einem Aspekt der Erfindung umfasst das Auswerten des Verhaltens des Signals des Sensors:
- Filtern des Signals des Sensors;
- Bestimmen von Maxima und Minima des gefilterten Signals; und
- Erkennen einer Änderung der Maxima und Minima über den Zeitraum.

Vorzugsweise wird das gemessene zeitabhängige Signal gefiltert, beispielsweise mit einem Tiefpassfilter oder einem Bandpassfilter. Hierdurch werden unerwünschte Frequenzanteile reduziert oder entfernt. In dem gefilterten Signal können Minima und Maxima bestimmt werden. Diese können über die Zeit beobachtet und miteinander verglichen werden. Aus den auftretenden Änderungen kann wiederum auf einen Schräglauf geschlossen werden.

Gemäß einem Aspekt der Erfindung werden beim Erkennen einer Änderung der Maxima und Minima über den Zeitraum Signale des Sensors für die gleiche Geschwindigkeit des Fortbewegungsmittels betrachtet oder es wird eine Normierung mit der Geschwindigkeit durchgeführt wird. Vorzugsweise werden beim Vergleichen Signale betrachtet, die bei der gleichen Geschwindigkeit erfasst wurden, da die Geschwindigkeit sich auf die Größe der Maxima und Minima auswirkt. Alternativ kann eine Normierung mit der Geschwindigkeit durchgeführt werden, um den Einfluss der Geschwindigkeit zu kompensieren. Beide Ansätze erhöhen die Zuverlässigkeit der Erkennung eines Schräglaufes.

Gemäß einem Aspekt der Erfindung wird ein möglicher Spurfehler oder ein möglicher Sturzfehler des Reifens festgestellt, wenn eine Änderung der Maxima und Minima über den Zeitraum erkannt wird. Untersuchungen haben gezeigt, dass eine Änderung der Maxima und Minima darauf hindeutet, dass der Reifen einen Sturzfehler oder einen Spurfehler hat. Welche Art Fehler vorliegt, kann durch die bereits erwähnte Analyse des Frequenzbildes konkretisiert werden.

Gemäß einem Aspekt der Erfindung wird zusätzlich zur lateralen Beschleunigung auch eine radiale Beschleunigung erfasst, die dazu verwendet wird, einen Bereich um eine Bodenaufstandsfläche des Reifens zu identifizieren, wobei die Maxima und Minima innerhalb dieses Bereichs bestimmt werden. Da die auftretenden lateralen Beschleunigungen recht klein sind, ist es technisch vorteilhaft, die Maxima und Minima nur in einem Bereich um die Bodenaufstandsfläche zu betrachten, d.h. die Minima und Maxima zu bestimmen, die an den Rändern der Bodenaufstandsfläche auftreten. Über die radiale Beschleunigung kann diese zuverlässig detektiert werden.

Gemäß einem Aspekt der Erfindung werden Beträge der Maxima und Minima verglichen und es wird ein möglicher Spurfehler des Reifens festgestellt, wenn die Beträge der Maxima und Minima abweichen. Alternativ zu den Änderungen der Maxima und Minima kann auch der Betrag des Minimums mit dem Betrag des Maximums verglichen werden. Die beiden Beträge sollten näherungsweise gleich sein. Unterschiede sind ein Anzeichen dafür, dass ein Spurfehler vorliegt.

Vorzugsweise wird eine erfindungsgemäße Lösung in einem Fortbewegungsmittel eingesetzt. Bei dem Fortbewegungsmittel kann es sich insbesondere um ein Kraftfahrzeug handeln, z.B. einen Personenkraftwagen oder ein Nutzfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Erkennen eines Schräglaufes eines Reifens eines Fortbewegungsmittels;
- Fig. 2: zeigt Verfahrensschritte, die beim Auswerten eines Verhaltens eines Signals eines Sensors durchgeführt werden können;
- Fig. 3: zeigt eine erste Ausführungsform einer Vorrichtung zum Erkennen eines Schräglaufes eines Reifens eines Fortbewegungsmittels;
- Fig. 4: zeigt eine zweite Ausführungsform einer Vorrichtung zum Erkennen eines Schräglaufes eines Reifens eines Fortbewegungsmittels;
- Fig. 5: zeigt schematisch ein Fortbewegungsmittel, in dem eine erfindungsgemäße Lösung realisiert ist;
- Fig. 6: zeigt schematisch einen Reifen für ein Kraftfahrzeug, in dem ein Sensor verbaut ist;
- Fig. 7: zeigt schematisch den Aufbau eines Reifendrucksensors;
- Fig. 8: zeigt beispielhaft den Verlauf der Radialbeschleunigung gegen die Zeit;
- Fig. 9: zeigt beispielhaft die Abhängigkeit der Minima und Maxima der Lateralbeschleunigung vom Schräglaufwinkel für verschiedene Geschwindigkeiten; und
- Fig. 10: zeigt beispielhaft die Abhängigkeit der Minima und Maxima der Lateralbeschleunigung vom Sturzwinkel für verschiedene Geschwindigkeiten.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

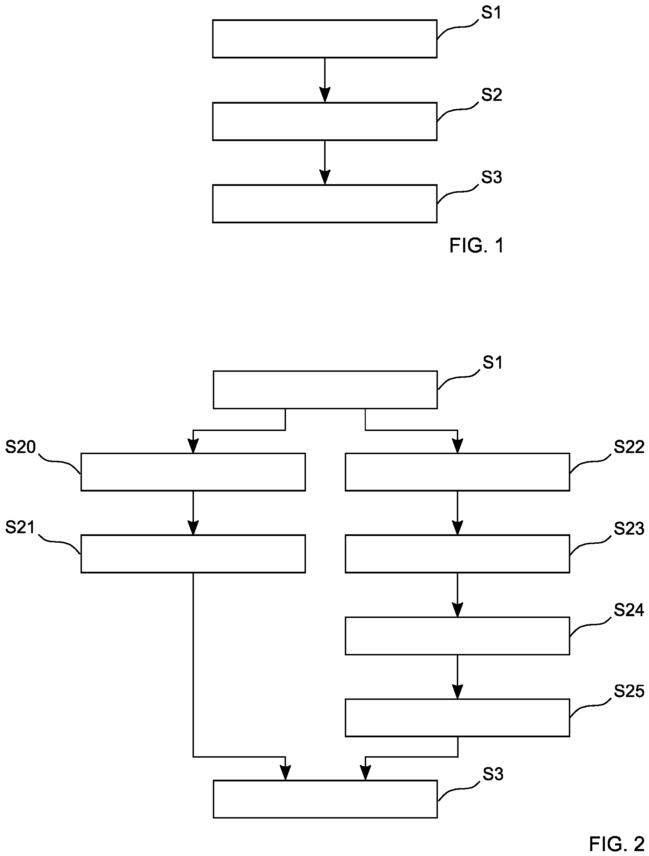

Fig. 1 zeigt schematisch ein Verfahren zum Erkennen eines Schräglaufes eines Reifens eines Fortbewegungsmittels. In einem ersten Schritt wird während eines Betriebs des Fortbewegungsmittels eine laterale Beschleunigung mittels eines im Reifen angeordneten Sensors erfasst S1. Ein Verhalten eines Signals des Sensors wird über einen Zeitraum ausgewertet S2. Wenn sich das Verhalten des Signals des Sensors über den Zeitraum ändert, wird das Vorliegen eines Schräglaufes des Reifens festgestellt S3.

Fig. 2 zeigt Verfahrensschritte, die nach dem Erfassen S1 der lateralen Beschleunigung beim Auswerten eines Verhaltens des Signals durchgeführt werden können. Eine erste Möglichkeit besteht darin, eine Frequenzanalyse S20 des Signals durchzuführen und eine Änderung eines Signalanteils in einem vorgegebenen Frequenzbereich über den Zeitraum zu erkennen S21. Ein möglicher Spurfehler des Reifens wird dabei festgestellt S3, wenn eine erkannte Änderung des Signalanteils in dem vorgegebenen Frequenzbereich über den Zeitraum einen definierten minimalen Wert übersteigt. Alternativ oder zusätzlich kann das Signal des Sensors gefiltert werden S22 und es können Maxima und Minima des gefilterten Signals bestimmt werden S23. Nun werden die Minima und Maxima über die Zeit beobachtet und miteinander verglichen. Dabei können Signale des Sensors für die gleiche Geschwindigkeit des Fortbewegungsmittels betrachtet werden oder es kann eine Normierung mit der Geschwindigkeit durchgeführt werden. Ein möglicher Spurfehler oder ein möglicher Sturzfehler des Reifens werden dann festgestellt S3, wenn eine Änderung der Maxima und Minima über den Zeitraum oberhalb eines definierten minimalen Wertes erkannt wird S24. Alternativ werden Beträge der Maxima und Minima verglichen S25 und ein möglicher Spurfehler des Reifens wird festgestellt S3, wenn die Beträge der Maxima und Minima abweichen. Zusätzlich zur lateralen Beschleunigung kann auch eine radiale Beschleunigung erfasst werden. Diese kann dazu verwendet werden, einen Bereich um eine Bodenaufstandsfläche des Reifens zu identifizieren. Die Maxima und Minima werden dann vorzugsweise innerhalb dieses Bereichs bestimmt S23.

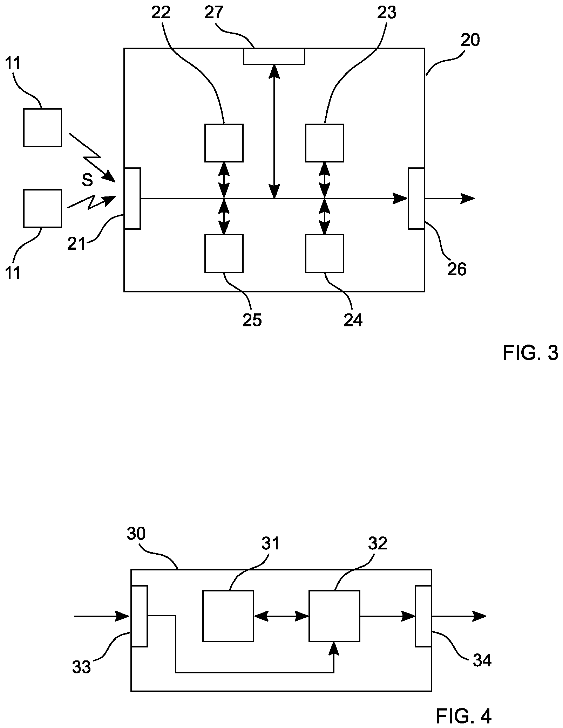

Fig. 3 zeigt eine vereinfachte schematische Darstellung einer ersten Ausführungsform einer Vorrichtung 20 zum Erkennen eines Schräglaufes eines Reifens eines Fortbewegungsmittels. Die Vorrichtung hat einen Eingang 21, über den Signale S eines im Reifen angeordneten Sensors 11 empfangen werden können. Eine Erfassungseinheit 22 ist eingerichtet, während eines Betriebs des Fortbewegungsmittels mittels des Sensors 11 eine lateralen Beschleunigung zu erfassen. Zusätzlich kann die Erfassungseinheit 22 eingerichtet sein, mittels des Sensors auch eine radiale Beschleunigung zu erfassen. Eine Auswerteeinheit 23 ist eingerichtet, ein Verhaltens des Signals S des Sensors 11 über einen Zeitraum auszuwerten und festzustellen, dass ein Schräglauf des Reifens vorliegt, wenn sich das Verhalten des Signals S des Sensors 11 über den Zeitraum ändert. Die Auswerteeinheit 23 kann zu diesem Zweck dazu eingerichtet sein, einige oder alle der in Fig. 2 gezeigten Verfahrensschritte auszuführen. Informationen über einen festgestellten Schräglauf des Reifens können über einen Ausgang 26 der Vorrichtung 20 zur weiteren Nutzung ausgegeben werden. Der Eingang 21 und der Ausgang 26 können zu einer bidirektionalen Schnittstelle zusammengefasst sein.

Die Erfassungseinheit 22 und die Auswerteeinheit 23 können von einer Kontrolleinheit 24 gesteuert werden. Über eine Benutzerschnittstelle 27 können gegebenenfalls Einstellungen der Erfassungseinheit 22, der Auswerteeinheit oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Erfassungseinheit 22, die Auswerteeinheit und die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer CPU oder einer GPU. In Fig. 3 ist die Vorrichtung 20 eine eigenständige Komponente. Sie kann alternativ auch Bestandteil eines Sensors 11 sein.

Fig. 4 zeigt eine vereinfachte schematische Darstellung einer zweiten Ausführungsform einer Vorrichtung 30 zum Erkennen eines Schräglaufes eines Reifens eines Fortbewegungsmittels. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen von einem mobilen Endgerät. Vom Prozessor 32 generierte Daten werden über einen Ausgang 34 bereitgestellt. Darüber hinaus können Daten im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

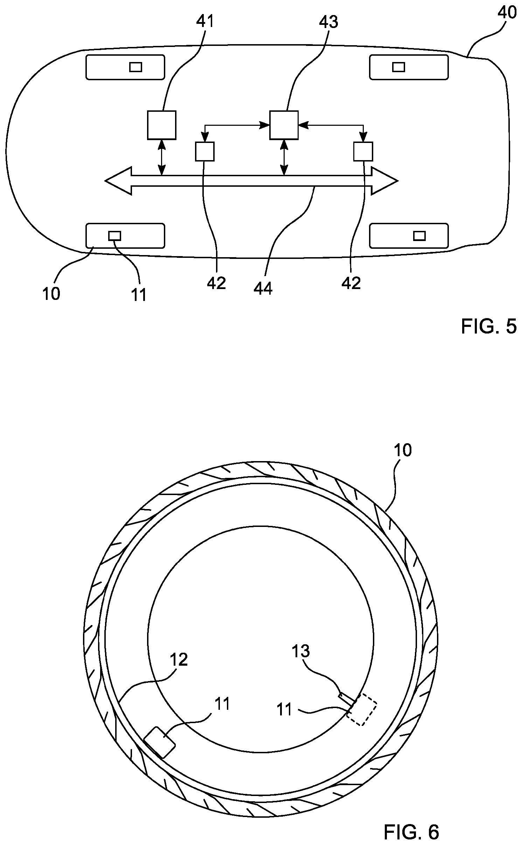

Fig. 5 zeigt schematisch ein Fortbewegungsmittel 40. Bei dem Fortbewegungsmittel 40 handelt es sich in diesem Beispiel um ein Kraftfahrzeug. Das Fortbewegungsmittel 40 weist zwei Achsen mit je zwei Reifen 10 auf. Zudem weist das Fortbewegungsmittel 40 ein Reifenkontrollsystem 41 auf. In den Reifen

10 des Fortbewegungsmittels 40 sind Reifensensoren 11 angeordnet, die vom Reifenkontrollsystem 41 genutzt werden. Das Reifenkontrollsystem 41 weist eine erfindungsgemäße Vorrichtung 20 zum Erkennen eines Schräglaufes auf. Für die Kommunikation mit den Reifensensoren 11 weist das Fortbewegungsmittel 40 einen oder mehrere Empfänger 42 auf, die an eine zentrale Kontrolleinheit 43 (CCU: Central Control Unit) angebunden sind. Die Kommunikation der Komponenten im Fortbewegungsmittel 40 erfolgt beispielsweise über ein Netzwerk 44.

Fig. 6 zeigt schematisch einen Reifen 10 für ein Fortbewegungsmittel, in dem ein Reifensensor 11 angeordnet ist, z.B. ein Reifensensor 11 zur Druckmessung, der auch die Messung von Beschleunigungen erlaubt. Dieser kann am Innerliner 12 des Reifens angebracht sein, beispielsweise mit Hilfe eines eingeklebten Containers. Alternativ kann der Reifensensor 11 auch an einem Ventil 13 des Reifens angeordnet sein. Dies ist durch den gestrichelten Kasten am Ventil 13 angedeutet.

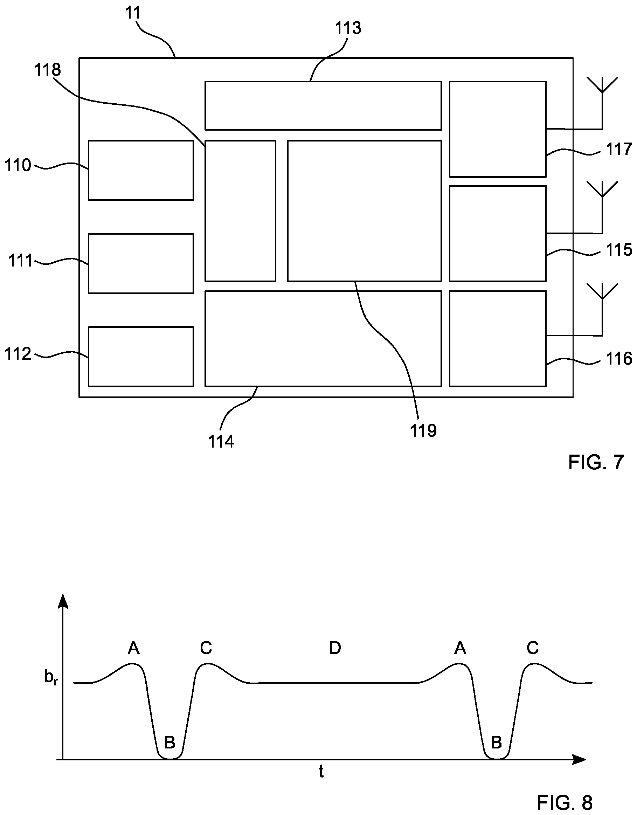

Fig. 7 zeigt beispielhaft einen Aufbau eines Reifensensors 11. Der Reifensensor 11 weist in diesem Beispiel einen Drucksensor 110 für die Messung des Reifendrucks, einen Temperatursensor 111 für die Messung der Temperatur im Inneren des Reifens sowie einen Beschleunigungssensor 112 für das Messen von Beschleunigungen auf. Die Messwerte des Beschleunigungssensors 112 werden üblicherweise genutzt, um verschiedene Betriebsmodi des Reifensensors 11 zu aktivieren, z.B. einen Modus "Parken" oder einen Modus "Fahren". Ein Energiemanager 113 regelt die Energieversorgung der verschiedenen Komponenten des Reifensensors 11. Firmware, Applikationen und Kalibrierungsdaten des Reifensensors 11 sind in einem Speicher 114 abgelegt. Dieser kann beispielsweise einen ROM-Speicher (ROM: Read-Only Memory; Nur-Lese-Speicher) und einen Flash-Speicher umfassen. Für das Übermitteln von Daten ist ein RF-Sender 115 vorgesehen, der beispielsweise mit einer Frequenz von 315 MHz oder 434 MHz senden kann. Zum Empfangen von Daten ist ein LF-Empfänger 116 vorgesehen, der z.B. eine Frequenz von 125 kHz verwenden kann. Zusätzlich kann eine Kommunikation mittels Bluetooth erfolgen. Zu diesem Zweck weist der Reifensensor 11 ein Bluetooth-Modul 117 auf. Die Messwerte des Drucksensors 110, des Temperatursensors 111 und des Beschleunigungssensors 112 werden von einem A/D-Wandler 118 in digitale Daten gewandelt. Die Steuerung des Reifensensors 11 erfolgt durch einen Mikrocontroller 119.

Fig. 8 zeigt beispielhaft den Verlauf der Radialbeschleunigung gegen die Zeit. Die Radialbeschleunigung bᵣ ist auf der Ordinate und die Zeit t auf der Abszisse aufgetragen. Die Werte der Radialbeschleunig bᵣ sind für ein Zeitintervall angegeben, in welchem der Reifensensor zweimal vollständig durch die Reifenaufstandszone B des jeweiligen Reifens und die daran angrenzenden Deformationsbereiche A, C bewegt wird. Im Bereich D zwischen den Deformationsbereichen C, A ist die Radialbeschleunig bᵣ im Wesentlichen konstant. Gut erkennbar ist, dass sich der Zeitraum um den Eintritt des Reifensensors in die Reifenaufstandszone B und den Austritt des Reifensensors aus der Reifenaufstandszone B herum, d.h. der Durchgang durch die Deformationsbereiche A, C, jeweils aus dem lokalen Maximum im Signal bestimmen lässt.

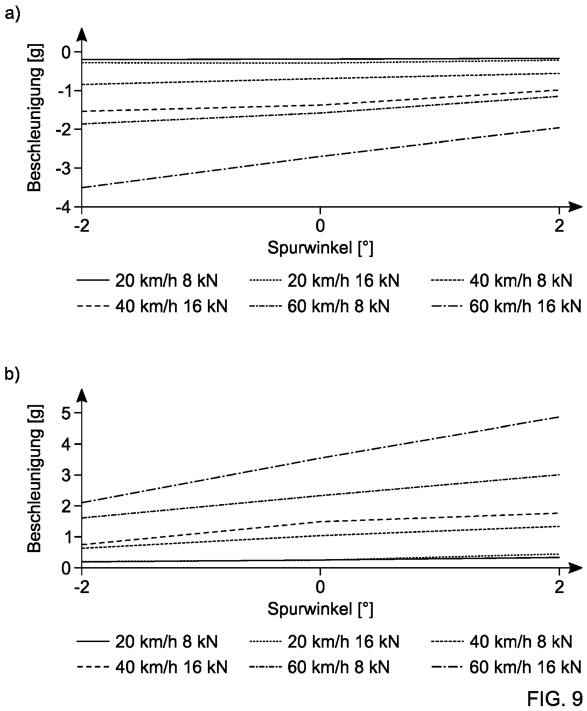

Fig. 9 zeigt beispielhaft die Abhängigkeit der Minima und Maxima der Lateralbeschleunigung vom Spurwinkel für verschiedene Geschwindigkeiten und Beladungszustände. In den zugrundeliegenden Untersuchungen wurden als Beladungszustände 8 kN und 16 kN eingestellt. Gut erkennbar ist, dass die Maxima und Minima vom jeweiligen Spurwinkel abhängen und eine Änderung der Maxima und Minima für einen gegebenen Reifen über die Zeit somit einen Rückschluss zulässt, dass ein Spurfehler des Reifens vorliegt.

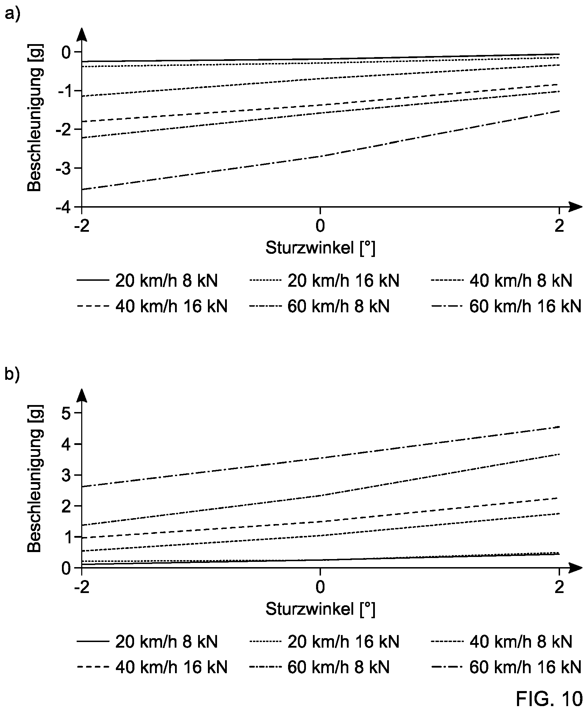

Fig. 10 zeigt beispielhaft die Abhängigkeit der Minima und Maxima der Lateralbeschleunigung vom Sturzwinkel für verschiedene Geschwindigkeiten und Beladungszustände. In den zugrundeliegenden Untersuchungen wurden wiederum als Beladungszustände 8 kN und 16 kN eingestellt. Gut erkennbar ist, dass die Maxima und Minima vom jeweiligen Sturzwinkel abhängen und eine Änderung der Maxima und Minima für einen gegebenen Reifen über die Zeit somit einen Rückschluss zulässt, dass ein Sturzfehler des Reifens vorliegt.

### Bezugszeichenliste

- 10: Reifen
- 11: Reifensensor
- 110: Drucksensor
- 111: Temperatursensor
- 112: Beschleunigungssensor
- 113: Energiemanagement
- 114: Speicher
- 115: RF-Sender
- 116: LF-Empfänger
- 117: Bluetooth-Modul
- 118: A/D-Wandler
- 119: Mikrocontroller
- 12: Innerliner
- 13: Ventil
- 20: Vorrichtung
- 21: Eingang
- 22: Erfassungseinheit
- 23: Auswerteeinheit
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Fortbewegungsmittel
- 41: Reifendruckkontrollsystem
- 42: Empfänger
- 43: Zentrale Kontrolleinheit
- 44: Netzwerk

- bᵣ: Radialbeschleunigung
- t: Zeit t
- A: Deformationsbereich
- B: Reifenaufstandszone
- C: Deformationsbereich
- D: Zwischenbereich
- S: Signal

- S1: Erfassen einer lateralen Beschleunigung
- S2: Auswerten eines Signalverhaltens
- S3: Feststellen eines Schräglaufes

- S20: Durchführen einer Frequenzanalyse
- S21: Erkennen einer Änderung eines Signalanteils
- S22: Filtern des Signals
- S23: Bestimmen von Maxima und Minima
- S24: Erkennen einer Änderung der Maxima und Minima
- S25: Vergleichen von Beträgen der Maxima und Minima

## Patentansprüche

1. Verfahren zum Erkennen eines Schräglaufes eines Reifens (10) eines Fortbewegungsmittels (40), mit den Schritten:
- Erfassen (S1) einer lateralen Beschleunigung mittels eines im Reifen (10) angeordneten Sensors (11) während eines Betriebs des Fortbewegungsmittels (40);
- Auswerten (S2) eines Verhaltens eines Signals (S) des Sensors (11) über einen Zeitraum; und
- Feststellen (S3), dass ein Schräglauf des Reifens (10) vorliegt, wenn sich das Verhalten des Signals (S) des Sensors (11) über den Zeitraum ändert.

2. Verfahren gemäß Anspruch 1, wobei das Auswerten (S2) des Verhaltens des Signals (S) des Sensors (11) umfasst:
- Durchführen einer Frequenzanalyse (S20) des Signals (S); und
- Erkennen (S21) einer Änderung eines Signalanteils in einem vorgegebenen Frequenzbereich (B) über den Zeitraum.

3. Verfahren gemäß Anspruch 2, wobei ein möglicher Spurfehler des Reifens (10) festgestellt wird (S3), wenn eine Änderung des Signalanteils in dem vorgegebenen Frequenzbereich (B) über den Zeitraum erkannt wird (S21), die einen definierten minimalen Wert übersteigt.

4. Verfahren gemäß einem der vorherigen Ansprüche, wobei das Auswerten (S2) des Verhaltens des Signals (S) des Sensors (11) umfasst:
- Filtern (S22) des Signals (S) des Sensors (11);
- Bestimmen (S23) von Maxima und Minima des gefilterten Signals; und
- Erkennen (S24) einer Änderung der Maxima und Minima oberhalb eines definierten minimalen Wertes über den Zeitraum.

5. Verfahren gemäß Anspruch 4, wobei beim Erkennen (S25) einer Änderung der Maxima und Minima über den Zeitraum Signale (S) des Sensors (11) für die gleiche Geschwindigkeit des Fortbewegungsmittels (40) betrachtet werden oder einer Normierung mit der Geschwindigkeit durchgeführt wird.

6. Verfahren gemäß Anspruch 4 oder 5, wobei ein möglicher Spurfehler oder ein möglicher Sturzfehler des Reifens (10) festgestellt wird (S3), wenn eine Änderung der Maxima und Minima über den Zeitraum erkannt wird, oder wobei Beträge der Maxima und Minima verglichen werden (S25) und ein möglicher Spurfehler des Reifens (10) festgestellt wird (S3), wenn die Beträge der Maxima und Minima abweichen.

7. Verfahren gemäß einem der Ansprüche 4 bis 6, wobei zusätzlich zur lateralen Beschleunigung auch eine radiale Beschleunigung erfasst wird, die dazu verwendet wird, einen Bereich um eine Bodenaufstandsfläche des Reifens zu identifizieren, wobei die Maxima und Minima innerhalb dieses Bereichs bestimmt werden.

8. Computerprogramm mit Instruktionen, die bei Ausführung durch einen Computer den Computer zur Ausführung der Schritte eines Verfahrens gemäß einem der Ansprüche 1 bis 7 zum Erkennen eines Schräglaufes eines Fahrzeugreifens veranlassen.

9. Vorrichtung (20) zum Erkennen eines Schräglaufes eines Reifens (10) eines Fortbewegungsmittels (40), mit
- einer Erfassungseinheit (22) zum Erfassen (S1) einer lateralen Beschleunigung mittels eines im Reifen (10) angeordneten Sensors (11) während eines Betriebs des Fortbewegungsmittels (40); und
- einer Auswerteeinheit (23) zum Auswerten (S2) eines Verhaltens eines Signals (S) des Sensors (11) über einen Zeitraum und zum Feststellen (S3), dass ein Schräglauf des Reifens (10) vorliegt, wenn sich das Verhalten des Signals (S) des Sensors (11) über den Zeitraum ändert.

10. Fortbewegungsmittel (40), wobei das Fortbewegungsmittel (40) eine Vorrichtung (20) gemäß Anspruch 9 aufweist oder eingerichtet ist, ein Verfahren gemäß einem der Ansprüche 1 bis 7 zum Erkennen eines Schräglaufes eines Reifens (10) des Fortbewegungsmittels (40) auszuführen.
